# EUROPEAN PATENT SPECIFICATION

(11) **EP 3 713 147 B1**
(45) Date of publication and mention of the grant of the patent: **16.02.2022**
(21) Application number: 18875764.5
(22) Date of filing: 10.05.2018
(51) Int. Cl.: H04L 9/06, H04L 9/14, B61L 27/00, G06F 21/71, H04L 29/06

(54) **RAILWAY SIGNAL SECURITY ENCRYPTION METHOD AND SYSTEM**
VERFAHREN UND SYSTEM ZUR SICHERHEITSVERSCHLÜSSELUNG VON EISENBAHNSIGNALEN
PROCÉDÉ ET SYSTÈME DE CHIFFREMENT DE SÉCURITÉ DE SIGNAL FERROVIAIRE

(30) Priority: 13.11.2017 CN 201711113164
(43) Date of publication of application: 23.09.2020
(73) Proprietor: CRSC Research & Design Institute Group Co., Ltd., Beijing 100070 (CN)
(72) Inventor: WANG, Yimin, Beijing 100070 (CN); LIU, Zhen, Beijing 100070 (CN); ZUO, Lin, Beijing 100070 (CN); GUO, Weiwei, Beijing 100070 (CN); HUANG, Yaqian, Beijing 100070 (CN); LI, Qiang, Beijing 100070 (CN); YU, Qing, Beijing 100070 (CN)
(74) Representative: Huang, Liwei
(86) International application number: PCT/CN2018/086256
(87) International publication number: WO 2019/091071

(56) References cited:
- CN-A- 104 618 338
- CN-A- 108 011 867
- CN-U- 202 711 261
- CN-U- 202 711 261
- CN-U- 204 066 121
- US-A1- 2015 032 946
- MENGHUA XU ET AL: "Simulation and Verification of RSSP-II Safety Communication Protocol", BUSINESS COMPUTING AND GLOBAL INFORMATIZATION (BCGIN), 2012 SECOND INTERNATIONAL CONFERENCE ON, IEEE, 12 October 2012 (2012-10-12), pages 731-734, XP032283054, DOI: 10.1109/BCGIN.2012.196 ISBN: 978-1-4673-4469-2
- ZHENG Changzong et al.: "Study of railway signal safety protocol (RSSP)", Railway Signaling & Communication, vol. 47, no. 10, 31 December 2011 (2011-12-31), pages 66-69, XP009520808, ISSN: 1000-7458, DOI: 10.13879/j.issn1000-7458.2011.10.005

## Description

### TECHNICAL FIELD

The present disclosure belongs to a technical field of encryption, and particularly, to a method and system for security encryption of railway signal.

### BACKGROUND

A Railway Signal Safety Protocol II (RSSP-II) is a protocol adopted for communication between railway signaling devices, and a Safety Integrity Level (SIL) of the RSSP-II can reach SIL4. Currently, the existing RSSP-II are all modified Message authentication code (MAC) algorithms based on the Data Encryption Standard (DES). A DES algorithm is a cryptographic algorithm developed by the International Business Machines (IBM) corporation with the help of the US National Security Agency (NSA), and originally was intended to provide high encryption protection for unclassified sensitive information of the government. It is the first encryption algorithm guaranteed by the US government, and was officially used as the Federal Information Processing Standard (FIPS) in 1977. The DES was primarily used by non-military federal agencies and private sectors, and rapidly became the most famous and widely-used commercial cryptographic algorithm.

In 2006, a SM4 (national commercial secret algorithm) cryptographic algorithm used for wireless local area network products is released in China. It is the first time for China to release the commercial cryptographic algorithm. However, so far, no solutions for the SM4 are proposed in the RSSP-II.

The document CN 202 711 261 discloses an encryption card that is connected with encryption module for implementing several cryptographic algorithm operations.

The document: "Simulation and Verification of RSSP-II Safety Communication Protocol", by MENGHUA XU ET AL; BUSINESS COMPUTING AND GLOBAL INFORMATIZATION (BCGIN), 2012 SECOND INTERNATIONAL CONFERENCE ON, IEEE, 12 October 2012, pages 731-734, ISBN: 978-1-4673-4469-2; discloses simulation and verification of RSSP-II Safety Communication Protocol; which is an upper layer protocol that ensures safety transmission of safety related information in a non-trusted channel, for a railway signal system.

### SUMMARY

In order to solve the technical problems, the present disclosure discloses a method and system for security encryption of railway signal.

The invention is defined in the independent claims. Particular embodiments are set out in the dependent claims.

The present disclosure discloses a method for security encryption of railway signal, including:

Setting a plurality of security encryption interfaces, wherein the plurality of security encryption interfaces respectively correspond to different encryption algorithms;

Selecting one security encryption interface from the plurality of security encryption interfaces; and

Encrypting data by using the encryption algorithm corresponding to the selected security encryption interface.

Further, the encryption algorithms include a DES encryption algorithm and a SM4 encryption algorithm.

Further, the encryption interfaces are set on a Message Authentication Safety Layer (MASL).

Further, an encryption selection instruction is received, and one security encryption interface is selected according to the encryption selection instruction.

The present disclosure further provides a system for security encryption of railway signal, wherein

The system for security encryption of railway signal includes a plurality of security encryption interfaces and a plurality of pieces of encryption hardware, wherein

The plurality of security encryption interfaces are respectively connected with different encryption hardware.

Further, the system for security encryption of railway signal further includes an encryption selection unit, and the encryption selection unit selects one security encryption interface from the plurality of security encryption interfaces according to an encryption selection instruction.

Further, the plurality of pieces of encryption hardware respectively execute a security encryption algorithm.

Further, the encryption algorithms include a DES encryption algorithm and a SM4 encryption algorithm.

Further, the security encryption interfaces receive data which needs to be encrypted from a MASL.

The method and system for security encryption of railway signal disclosed by the present disclosure fully consider different encryption algorithms, and can select different encryption algorithms according to different types of devices and applications, thereby improving security of communication.

### BRIEF DESCRIPTION OF THE DRAWINGS

In order to clearly illustrate the technical solution of the embodiments of the disclosure or the prior art, the drawings of the embodiments or description in the prior art will be briefly described in the following. It is obvious that the described drawings are only related to some embodiments of the disclosure, and those skilled in the art also can obtain other drawings, without any inventive work, according to the drawings.

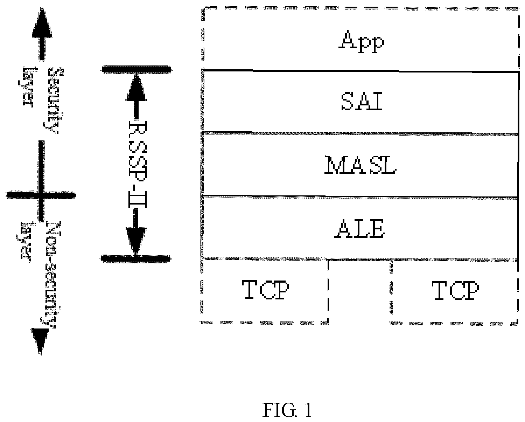

FIG. 1 shows a layered schematic diagram of a core logic of a security communication encryption protocol stack according to an embodiment of the present disclosure.

### DETAILED DESCRIPTION

In order to make objects, technical details and advantages of the embodiments of the disclosure apparent, the technical solutions of the embodiment will be described in a clearly and fully understandable way in connection with the drawings related to the embodiments of the disclosure. It is obvious that the described embodiments are just a part but not all of the embodiments of the disclosure. Based on the described embodiments herein, those skilled in the art can obtain other embodiment(s), without any inventive work, which should be within the scope of the disclosure.

In a RSSP-II, a plurality of encryption interfaces are provided, without loss of generality, for example, a first encryption interface and a second encryption interface can be set. However, the present disclosure is not limited to such two encryption interfaces, i.e., the first encryption interface and the second encryption interface, and a plurality of encryption interfaces can also be set. The plurality of encryption interfaces of the present disclosure can be set in a corresponding layer of a RSSP-II protocol stack. As shown in a schematic diagram of a security encryption protocol stack according to an embodiment of the present disclosure in FIG. 1, the protocol stack includes a Transfer Control Protocol (TCP) layer, an Adaptation & redundancy management Layer Entity (ALE) , a MASL, a Safe Application Intermediate sub-layer(SAI) and an Application (APP) layer, wherein the SAI layer, the MASL and the ALE layer are RSSP-II layers, the MASL, the SAI layer and the APP layer belong to a security layer, and the ALE layer and the TCP layer belong to a non-security layer. In the present disclosure, interface functions of the encryption interfaces are set in the MASL, and data of the MASL can be sent to corresponding hardware encryption modules via the corresponding encryption interfaces to execute encryption.

The plurality of encryption interfaces are respectively connected with different encryption hardware, and a plurality of pieces of encryption hardware correspond to respective encryption algorithms. Without loss of generality, for example, the first encryption interface is connected with first encryption hardware, the second encryption interface is connected with second encryption hardware, the first encryption hardware executes a first encryption algorithm, and the second encryption hardware executes a second encryption algorithm.

The first encryption interface interfaces with the first encryption hardware, and the first encryption hardware can execute a DES encryption algorithm; and the second encryption interface interfaces with the second encryption hardware, and the second encryption hardware can execute a SM4 encryption algorithm.

Both parties negotiate to determine the encryption algorithm in a mode of:

Before data encryption, a data sender and a data receiver can negotiate encryption algorithms that can be used, and select to send data to the corresponding encryption hardware via the corresponding encryption interfaces according to the negotiated encryption algorithms.

Without loss of generality, when considering that received data needs to be encrypted by using the DES encryption algorithm according to a device type or a service requirement of the data receiver, the data receiver sends an encryption selection instruction to the data sender, and in the encryption selection instruction, indicates the data sender to select the DES encryption algorithm to encrypt the data.

After receiving the encryption selection instruction sent by the data receiver, the data sender determines to encrypt data on the MASL by using the DES encryption algorithm according to the encryption selection instruction. A related module of the data sender, e.g., an encryption selection module, sends data to be encrypted to the fist encryption hardware via the first encryption interface, and due to a case that the first encryption hardware executes the DES encryption algorithm, the data sent to the first encryption hardware is encrypted by using the DES encryption algorithm.

Similarly, if the receiver considers that the received data needs to be encrypted by SM4, the data receiver sends the encryption selection instruction to the data sender to notify the data sender to select the SM4 encryption algorithm to encrypt the data sent to the data receiver. After receiving the encryption selection instruction, the data sender sends data to be encrypted to the second encryption hardware via the second encryption interface, and due to a case that the second encryption hardware executes the SM4 encryption algorithm, the data sent to the second encryption hardware is encrypted by using the SM4 encryption algorithm.

Both parties determine the encryption algorithm without negotiation in a mode of:

The data sender itself can also determine the encryption algorithm to be used according to requirements (e.g., requirements for security, requirements of each national or regional security standard and the like) of an integral data system.

Without loss of generality, for example, when the system requires to use the SM4 encryption algorithm to encrypt the data, the system sends the encryption selection instruction to the data sender. The related module of the data sender, e.g., the encryption selection module, after obtaining the data encryption selection instruction, determines the corresponding encryption algorithm according to the data encryption selection instruction and for example, selects the DES encryption algorithm or the SM4 encryption algorithm. Then same as the mode that both parties negotiate to determine the encryption algorithm, the data is encrypted by a corresponding hardware encryption unit via the corresponding encryption interface.

Finally, it should be noted that the foregoing embodiments are merely used for illustrating rather than limitative of the technical solutions of the present disclosure. Connection indicated in the present disclosure does not necessarily mean direct electrical connection, and may also include an indirect connection mode. Words such as "first", "second" and the like indicated in the present disclosure do not necessarily denote any order, and may denote different hardware, modules and the like.

## Claims

1. A method for security encryption of railway signal, **characterized in** comprising:
setting a plurality of security encryption interfaces on a Message Authentication Safety Layer, wherein the plurality of security encryption interfaces respectively correspond to different encryption algorithms;
the plurality of security encryption interfaces include a first encryption interface and a second encryption interface, the first encryption interface is connected to a first encryption hardware, the second encryption interface is connected to a second encryption hardware, the first encryption hardware executes DES encryption algorithm, and the second encryption hardware executes SM4 encryption algorithm;
selecting one security encryption interface from the plurality of security encryption interfaces; and
according to the selected security encryption interface, sending data on the Message Authentication Safety Layer to corresponding encryption hardware via corresponding encryption interface, and the corresponding encryption hardware encrypts data by using the encryption algorithm corresponding to the selected security encryption interface;
wherein the method comprises a mode that a data sender and a data receiver negotiate to determine the encryption algorithm,
wherein before data encryption, the data sender and the data receiver negotiate the encryption algorithm to be used, and send data to the corresponding encryption hardware via the corresponding encryption interface;
if the data receiver considers that the data need to be encrypted by the DES encryption algorithm, the data receiver sends a first encryption selection instruction to the data sender, which instructs the data sender to select the DES encryption algorithm to encrypt the data,
after receiving the first encryption selection instruction, the data sender determines to encrypt data on the Message Authentication Safety Layer by using the DES encryption algorithm, an encryption selection module of the data sender sends the data to be encrypted to the fist encryption hardware via the first encryption interface, so that the first encryption hardware executes the DES encryption algorithm and the data sent to the first encryption hardware are encrypted by using the DES encryption algorithm;
if the data receiver considers that the data need to be encrypted by SM4, the data receiver sends a second encryption selection instruction to the data sender, which instructs the data sender to select the SM4 encryption algorithm to encrypt the data,
after receiving the second encryption selection instruction, the data sender sends J data to be encrypted to the second encryption hardware via the second encryption interface, so that the second encryption hardware executes the SM4 encryption algorithm and the data sent to the second encryption hardware are encrypted by using the SM4 encryption algorithm.

2. A system for security encryption of railway signal, comprising means for carrying out the method of claim 1.

## Patentansprüche

1. Verfahren zur Sicherheitsverschlüsselung eines Eisenbahnsignals, **dadurch gekennzeichnet, dass** es Folgendes umfasst:
Einstellen einer Vielzahl von Sicherheitsverschlüsselungsschnittstellen auf einer Nachrichtenauthentifizierung-Sicherheitsschicht, wobei die Vielzahl von Sicherheitsverschlüsselungsschnittstellen jeweils verschiedenen Verschlüsselungsalgorithmen entsprechen;
wobei die Vielzahl von Sicherheitsverschlüsselungsschnittstellen eine erste Verschlüsselungsschnittstelle und eine zweite Verschlüsselungsschnittstelle beinhaltet, die erste Verschlüsselungsschnittstelle mit einer ersten Verschlüsselungshardware verbunden ist, die zweite Verschlüsselungsschnittstelle mit einer zweiten Verschlüsselungshardware verbunden ist, die erste Verschlüsselungshardware DES-Verschlüsselungsalgorithmus ausführt, und die zweite Verschlüsselungshardware SM4-Verschlüsselungsalgorithmus ausführt;
Auswählen einer Sicherheitsverschlüsselungsschnittstelle aus der Vielzahl von Sicherheitsverschlüsselungsschnittstellen; und
entsprechend der ausgewählten Sicherheitsverschlüsselungsschnittstelle, Senden von Daten auf der Nachrichtenauthentifizierung-Sicherheitsschicht an entsprechende Verschlüsselungshardware über entsprechende Verschlüsselungsschnittstelle, und wobei die entsprechende Verschlüsselungshardware Daten durch Verwenden des Verschlüsselungsalgorithmus, der der ausgewählten Sicherheitsverschlüsselungsschnittstelle entspricht, verschlüsselt;
wobei das Verfahren einen Modus umfasst, in dem ein Datensender und ein Datenempfänger verhandeln, um den Verschlüsselungsalgorithmus zu bestimmen,
wobei der Datensender und der Datenempfänger vor einer Datenverschlüsselung den zu verwendenden Verschlüsselungsalgorithmus aushandeln und Daten über die entsprechende Verschlüsselungsschnittstelle an die entsprechende Verschlüsselungshardware senden;
wobei, wenn der Datenempfänger der Ansicht ist, dass die Daten mit dem DES-Verschlüsselungsalgorithmus verschlüsselt werden müssen, er eine erste Verschlüsselungsauswahlanweisung an den Datensender sendet, die den Datensender anweist, den DES-Verschlüsselungsalgorithmus zur Verschlüsselung der Daten auszuwählen,
wobei der Datensender nach Empfangen der ersten Verschlüsselungsauswahlanweisung bestimmt, Daten auf der Nachrichtenauthentifizierung-Sicherheitsschicht durch Verwenden des DES-Verschlüsselungsalgorithmus zu verschlüsseln, ein Verschlüsselungsauswahlmodul des Datensenders die zu verschlüsselnden Daten über die erste Verschlüsselungsschnittstelle an die erste Verschlüsselungshardware sendet, sodass die erste Verschlüsselungshardware den DES-Verschlüsselungsalgorithmus ausführt und die an die erste Verschlüsselungshardware gesendeten Daten durch Verwenden des DES-Verschlüsselungsalgorithmus verschlüsselt werden;
wobei, wenn der Datenempfänger der Ansicht ist, dass die Daten durch SM4 verschlüsselt werden müssen, er eine zweite Verschlüsselungsauswahlanweisung an den Datensender sendet, die den Datensender anweist, den SM4-Verschlüsselungsalgorithmus zur Verschlüsselung der Daten auszuwählen,
wobei der Datensender nach Empfangen der zweiten Verschlüsselungsauswahlanweisung die zu verschlüsselnden Daten über die zweite Verschlüsselungsschnittstelle an die zweite Verschlüsselungshardware sendet, sodass die zweite Verschlüsselungshardware den SM4-Verschlüsselungsalgorithmus ausführt und die an die zweite Verschlüsselungshardware gesendeten Daten durch Verwenden des SM4-Verschlüsselungsalgorithmus verschlüsselt werden.

2. System zur Sicherheitsverschlüsselung eines Eisenbahnsignals, umfassend Einrichtungen zum Durchführen des Verfahrens nach Anspruch 1.

## Revendications

1. Procédé de cryptage de sécurité d'un signal ferroviaire, **caractérisé en ce qu'**il comprend :
l'établissement d'une pluralité d'interfaces de cryptage de sécurité sur une couche de sécurité d'authentification de message, dans lequel la pluralité d'interfaces de cryptage de sécurité correspond respectivement à différents algorithmes de cryptage ;
la pluralité d'interfaces de cryptage de sécurité comprend une première interface de cryptage et une deuxième interface de cryptage, la première interface de cryptage est connectée à un premier matériel de cryptage, la deuxième interface de cryptage est connectée à un deuxième matériel de cryptage, le premier matériel de cryptage exécute l'algorithme de cryptage DES, et le deuxième matériel de cryptage exécute l'algorithme de cryptage SM4 ;
la sélection d'une interface de cryptage de sécurité parmi la pluralité d'interfaces de cryptage de sécurité ; et
selon l'interface de cryptage de sécurité sélectionnée, l'envoi de données sur la couche de sécurité d'authentification de message au matériel de cryptage correspondant via l'interface de cryptage correspondante, et le matériel de cryptage correspondant crypte les données en utilisant l'algorithme de cryptage correspondant à l'interface de cryptage de sécurité sélectionnée ;
dans lequel le procédé comprend un mode qu'un expéditeur de données et un récepteur de données négocient pour déterminer l'algorithme de cryptage,
dans lequel avant le cryptage des données, l'expéditeur de données et le récepteur de données négocient l'algorithme de cryptage à utiliser, et envoient les données au matériel de cryptage correspondant via l'interface de cryptage correspondante ;
si le récepteur de données considère que les données doivent être cryptées par l'algorithme de cryptage DES, le récepteur de données envoie une première instruction de sélection de cryptage à l'émetteur de données, qui demande à l'émetteur de données de sélectionner l'algorithme de cryptage DES pour crypter les données,
après avoir reçu la première instruction de sélection de cryptage, l'expéditeur de données détermine de crypter les données sur la couche de sécurité d'authentification de message en utilisant l'algorithme de cryptage DES, un module de sélection de cryptage de l'expéditeur de données envoie les données à crypter au premier matériel de cryptage via la première interface de cryptage, de sorte que le premier matériel de cryptage exécute l'algorithme de cryptage DES et que les données envoyées au premier matériel de cryptage soient cryptées en utilisant l'algorithme de cryptage DES ;
si le récepteur de données considère que les données doivent être cryptées par SM4, le récepteur de données envoie une deuxième instruction de sélection de cryptage à l'expéditeur de données, qui demande à l'expéditeur de données de sélectionner l'algorithme de cryptage SM4 pour crypter les données,
après avoir reçu la deuxième instruction de sélection de cryptage, l'expéditeur de données envoie les données à crypter au deuxième matériel de cryptage via la deuxième interface de cryptage, de sorte que le deuxième matériel de cryptage exécute l'algorithme de cryptage SM4 et que les données envoyées au deuxième matériel de cryptage soient cryptées en utilisant l'algorithme de cryptage SM4.

2. Système de cryptage de sécurité d'un signal ferroviaire, comprenant des moyens pour exécuter le procédé de la revendication 1.
